(19) Europäisches Patentamt
European Patent Office
Office européen des brevets

(11) Veröffentlichungsnummer: **0 066 820**
**A1**

(12) **EUROPÄISCHE PATENTANMELDUNG**

(21) Anmeldenummer: **82104753.7**

(22) Anmeldetag: **29.05.82**

(51) Int. Cl.³: **D 06 P 3/10**, C 09 B 67/26, D 06 P 3/82

(30) Priorität: **06.06.81 DE 3122559**

(43) Veröffentlichungstag der Anmeldung: **15.12.82 Patentblatt 82/50**

(84) Benannte Vertragsstaaten: **AT BE CH DE FR GB IT LI**

(71) Anmelder: **HOECHST AKTIENGESELLSCHAFT, Postfach 80 03 20, D-6230 Frankfurt/Main 80 (DE)**

(72) Erfinder: **Glander, Siegfried, Dr., Wiesenweg 15, D-6232 Bad Soden am Taunus (DE)**
Erfinder: **Schön, Franz, Eisenacher Weg 4, D-6230 Frankfurt am Main 80 (DE)**

(54) **Verfahren zum Klotzfärben oder Bedrucken von Textilmaterial aus natürlichen oder synthetischen Polyamidfasern oder deren Mischungen mit anderen Fasern mit Reaktivfarbstoffen.**

(57) Bestimmte Reaktivfarbstoffe liegen in handelsüblicher Beschaffenheit in einer mit natürlichen oder synthetischen Polyamidfasern nicht reaktionsfähigen Form vor und müssen für die Ausbildung einer kovalenten Bindung mit dem Fasermaterial erst in einen reaktionsbereiten Zustand übergeführt werden. Die für diese Aufgabe bisher praktizierten Methoden blieben letztlich unbefriedigend, weil diese je nach den dafür angewandten Bedingungen entweder eine nicht genügende Menge von reaktionsfähigem Farbstoff zur Verfügung stellen können oder infolge Anfälligkeit der umgewandelten Form für Hydrolyse anteilsmäßig Inaktivierung des Farbstoffes herbeigeführt wird, was in beiden Fällen Farbstoffverluste zu Folge hat.

Erfindungsgemäß werden diese Mängel dadurch behoben, daß man vor dem Applikationsvorgang zunächst durch Behandlung solcher Farbstoffe unter dafür typischen Bedingungen, z.B. im alkalischen Medium, diese in ihre faserreaktive Form überführt und die umgewandelte Form danach durch Wechsel des pH-Bereichs, z.B. auf saures Milieu, chemisch stabilisiert. Die so zubereiteten Farbstoffe werden sodann zum Färben und Bedrucken von natürlichen oder synthetischen Polyamidfasern im neutralen bis sauren pH-Bereich eingesetzt. Eine solche Massnahme bietet die entscheidende Voraussetzung für akzeptable Ausbeuten gegenüber den bisher bekannten Arbeitsweisen.

EP 0 066 820 A1

Verfahren zum Klotzfärben oder Bedrucken von Textilmaterial aus natürlichen oder synthetischen Polyamidfasern oder deren Mischungen mit anderen Fasern mit Reaktivfarbstoffen

Die vorliegende Erfindung betrifft das Klotzfärben oder Bedrucken von Textilmaterial aus natürlichen oder synthetischen Polyamidfasern oder deren Mischungen mit anderen Fasern mit Reaktivfarbstoffen, welche in handelsüblicher Beschaffenheit in einer von sich aus mit der Fasersubstanz nicht reaktionsfähigen Form vorliegen und die aus wäßrigem Medium entsprechend bekannten Färbeprozessen im Falle des Ausziehfärbens sonst entweder direkt in ihrer nicht reaktionsfähigen Form unter sauren Bedingungen oder durch den Einfluß alkalisch wirkender Mittel während des Färbevorganges erst in ihre reaktionsfähige Form umgewandelt und dann unter nachfolgend eingestellten sauren Bedingungen auf der Faser zur Fixierung veranlaßt werden. Spezielle Zubereitungen derartiger Reaktivfarbstoffe, die für die Durchführung des neuen Verfahrens geeignet sind, werden vom Erfindungsgegenstand ebenfalls umfaßt.

Das Färben in der Hauptsache von Cellulosefasern mit sogenannten Reaktivfarbstoffen ist schon seit längerer Zeit bekannt und hat sich aufgrund der damit erhältlichen klaren wie trüben Nuancen und auch wegen der erzielbaren Echtheiten in der Praxis in weitem Umfang sehr bewährt. Derartige Farbmittel sind von organischer Herkunft und werden im COLOUR INDEX, 3. Auflage 1971 unter dem Gattungsbegriff "Reactive Dyes" aufgeführt. Es handelt sich hierbei um Farbstoffe aus der Reihe von Azo-, Anthrachinon- oder Phthalocyanin-Verbindungen, die auch als Metallkomplexe vorliegen können und welche mindestens eine mit der Faser reaktionsfähige Gruppe enthalten. In einigen Fällen liegt aber eine derartige mit der Faser

reagierende Gruppe nicht von vornherein vor, sondern wird als solche aus einem Vorläufer davon durch geeignete Maßnahmen erst im Zuge des Färbeprozesses gebildet. Ein sehr geläufiges Beispiel für den zuletzt erwähnten Typ sind Reaktivfarbstoffe auf Basis der Ester von leicht abspaltbaren ein- oder mehrwertigen, anorganischen oder organischen Säuren, insbesondere der Schwefelsäureester, mit ß-Hydroxyäthylsulfon-Verbindungen (Ester-Farbstoffe), bei denen während des Färbeprozesses durch den Einfluß alkalisch wirkender Mittel die faserreaktive Vinylsulfon-Form (VS-Form) der Farbstoffe entsteht.

Zum Colorieren von Cellulosetextilien aller Art werden Reaktivfarbstoffe sowohl im Textildruck als auch bei Auszieh- oder Kontinue-Färbeprozessen eingesetzt. Herkömmlicherweise wird die Fixierung dieser Farbstoffe auf der Faser in der Praxis vornehmlich aus wäßrigem Medium sowie in erster Linie in Anwesenheit alkalisch wirkender Mittel vorgenommen. Als Fixieralkalien eignen sich solche, welche aus der üblichen Handelsform der Ester-Farbstoffe die Einstellung der mit der Polyhydroxylfaser reaktionsfähigen VS-Form besorgen, je nach dem Grad der Reaktivität der Farbstoffe schon bei Raumtemperatur oder erst unter Zuhilfenahme von Erwärmen: Bei den Ausziehverfahren werden für diese Aufgabe in der Regel Natronlauge, Soda oder Trinatriumphosphat verwendet, bei Klotzverfahren sind hierfür außer Natronlauge und Soda auch Wasserglas und Natriumbicarbonat gebräuchlich.

Der Fixiervorgang der Reaktivfarbstoffe findet im Ausziehprozeß unmittelbar nach deren Aufziehen auf die Faser bei Temperaturen bis zum Kochpunkt des Färbebades statt, im Rahmen der Klotzfärbetechnik in einem an die Applikation angeschlossenen separaten Arbeitsgang durch Verweilen, Dämpfen oder Trockenhitzebehandlung.

Nachteilig wirkt sich bei den Klotzverfahren die verminderte Haltbarkeit der Reaktivfarbstoffe im alkalischen Bereich aus. So bilden sich beispielsweise unter diesen Bedingungen aus VS-Farbstoffen infolge Hydrolyse ß-Hydroxyäthylsulfon-Farbstoffe, die nicht mehr mit der Faser reagieren können. Dieses unerwünschte Verhalten läßt sich zwar durch eine zweibadige Behandlungsweise umgehen, indem zunächst der nicht reaktive Ester-Farbstoff alkalifrei appliziert und sodann das Aufbringen der erforderlichen Alkalimenge in einem zweiten Klotzvorgang besorgt wird, jedoch muß bei Verfolgung dieser Taktik dafür eine Zwischentrocknung in Kauf genommen werden.

Beim Drucken mit Reaktivfarbstoffen kann man der im alkalischen Medium gegebenen geringen Haltbarkeit der Reaktivfarbstoffe dadurch ausweichen, daß sogenannte Alkalispender den Druckpasten beigemischt werden, die erst beim Fixierprozeß unter höheren Temperaturen Alkali freisetzen. Solche Alkalispender sind beispielsweise Natriumbicarbonat, trichloressigsaures Natrium oder Dicyandiamid.

Zum Färben von Wolle und Polyamidfasern sind in handelsüblicher Beschaffenheit vorliegende Reaktivfarbstoffe des zuvor erläuterten Typs entweder in ihrer nicht faserreaktiven Form im sauren Milieu sowie unter Hochtemperatur (HT)-Bedingungen eingesetzt (DE-PS 28 34 997, DE-AS 28 47 913 und DE-OS 29 33 343) oder im Verlauf des Färbeprozesses zunächst in ihre faserreaktive Form umgewandelt und in dieser Form dann im sauren Milieu verwendet worden (TED-Verfahren, vgl. Technischer Rat aus Hoechst, Textil Nr. 73). Hierbei handelt es sich jedoch in beiden Fällen um Arbeitsweisen, deren Anwendbarkeit auf das Ausziehfärben beschränkt blieb. Hingegen gibt es in der Praxis bisher keine brauchbaren Kontinueverfahren für das Klotzfärben und Bedrucken von Wolle und Polyamidfasern mit Reaktivfarbstoffen.

Es wurde nun gefunden, daß Reaktivfarbstoffe, welche in handelsüblicher Beschaffenheit in einer von sich aus mit der Fasersubstanz nicht reaktionsfähigen Form vorliegen, dann mit guten Farbausbeuten auf natürlichen oder synthetischen Polyamidfasern gefärbt bzw. bedruckt werden können, wenn man diese Farbstoffe vor dem Klotzen bzw. Bedrucken zunächst im wäßrigen Medium so vorbehandelt, daß sie in ihre faserreaktive Form übergeführt sowie in dieser umgewandelten Form chemisch stabilisiert werden. Das Klotzfärben oder Bedrucken mit diesen Farbstoff-Zubereitungen erfolgt sodann ausschließlich aus wäßrigem, neutralen bis sauren Milieu entsprechend den gängigen, für diese Applikationstypen erforderlichen Maßnahmen.

Als Farbmittel, die sich nach dem erfindungsgemäßen Prinzip einsetzen lassen, kommen insbesondere die Umwandlungsprodukte solcher Sulfonyl-Reaktivfarbstoffe in Betracht, mit denen die Faser nach einem Additionsmechanismus über die Vinylsulfon(VS)-Form des Farbstoffes reagiert, in erster Linie Farbstoffe auf Basis der Ester von leicht abspaltbaren ein- oder mehrwertigen, anorganischen oder organischen Säuren mit ß-Hydroxyäthylsulfon-Verbindungen.

Anhand der Schwefelsäureester von ß-Hydroäthylsulfon-Farbstoffen (Sulfatoäthylsulfon-Farbstoffe), der von diesem Typ der Reaktivfarbstoffe wohl wichtigsten und am weitesten verbreiteten Handelsform, sollen die erfindungsgemäß erzeugten Zubereitungen und die damit möglichen Färbeverfahren für Textilien, die aus Polyamidfasern bestehen oder solche enthalten, erläutert werden:

Zur Durchführung des erfindungsgemäßen Verfahrens werden diese Ester-Farbstoffe zunächst in Wasser gelöst. Anschließend versetzt man die so erhaltene konzentrierte oder eine schon auf die gewünschte Konzentration verdünnte Farbstoff-Lösung mit einem alkalisch wirkenden Mittel, um die Ester-Gruppierung innerhalb des Sulfatoäthylsulfon-Restes zu spalten und diesen in den unmittelbar faserreaktiven Vinylsulfon-Rest überzuführen. Diese Behandlung wird bei Temperaturen zwischen Raumtemperatur und Kochtemperatur, vorzugsweise bei 25° bis 60°C sowie im alkalischen Bereich, vorzugsweise bei pH-Werten über 10, vorgenommen. Als alkalisch wirkende Mittel können dazu wäßrige Lösungen von Alkalihydroxiden und/oder von in Wasser alkalisch reagierenden Salzen eingesetzt werden, wie beispielsweise von Soda, Natronlauge, Wasserglas, Trinatriumphosphat u.a. Je nach Temperatur chemischer Natur des alkalisch wirkenden Mittels und dessen Menge beträgt die Behandlungszeit zur Farbstoff-Umwandlung in die VS-Form 10 Sekunden bis 10 Minuten. Anschließend wird die in dieser Weise gehandhabte alkalische Flotte abgesäuert und zur chemischen Stabilisierung der gebildeten VS-Form auf einen pH-Wert zwischen 7 und etwa 3, vorzugsweise zwischen 6,5 und 5 eingestellt. Das Absäuern erfolgt durch Zugabe einer Mineralsäure, wie beispielsweise Salzsäure, Schwefelsäure oder Phosphorsäure, oder durch Zugabe einer organischen Säure, wie beispielsweise Ameisensäure oder Essigsäure, zu der alkalischen Farbstoff-Lösung. Die so hergestellte Farbstoff-Zubereitung kann, wenn sie vor der Alkalibehandlung schon auf die gewünschte Farbstoffkonzentration eingestellt war, nunmehr direkt zum Klotzen des Textilgutes benutzt werden. Das Klotzen wird vorzugsweise bei Raumtemperatur durchgeführt.

Aus Gründen einer rationellen Verfahrensgestaltung werden vorwiegend die in konzentrierter Form angefallenen Lösungen des Ester-Farbstoffs mit dem alkalisch wirkenden

Mittel behandelt und diese Lösungen erst nach dem Absäuren durch Auffüllen mit Wasser auf die gewünschte Konzentration für den Klotzflottenansatz oder die Druckpaste verdünnt. Dabei ist es ratsam, nach der Verdünnung den pH-Wert nochmals zu kontrollieren und gegebenenfalls zu korrigieren. Es ist allerdings nicht notwendig,die konzentrierten Farbstoff-Zubereitungen unmittelbar vor dem Klotzen oder Bedrucken herzustellen. Sie können vielmehr auch auf Vorrat angesetzt werden und sind hierbei in Form von "Flüssig-Farbstoffen" oder in der Druckpaste längere Zeit lagerfähig. Durch Eindampfen gegebenenfalls bis zur Trockne kann die Konzentration einer derartigen Farbstoff-Zubereitung im Einklang mit den Bedürfnissen der Praxis erhöht werden.

Für den Gebrauch in Kontinueprozessen, wo durch fortlaufende Nachsätze eine ständige Konstanthaltung von Flottenkonzentration und Flottenvolumen geboten ist, kann die erfindungsgemäße Erzeugung der von sich aus reaktiven VS-Form aus den Ester-Farbstoffen mittels Alkalibehandlung auch automatisch durch einfaches Dosieren und Mischen von Handelsfarbstoff-Lösung und alkalisch wirkendem Mittel erfolgen, wobei man für den Umwandlungsablauf eine gewisse Verweilzeit einkalkulieren muß. Danach läßt sich mit Hilfe einer zweiten Dosiereinrichtung in Abhängigkeit von einem vorgegebenen, schwach sauren pH-Wert die Sauerstellung des unmittelbar in das eigentliche Applikationsgeschehen eingehenden Färbemediums zuwege bringen.

Als vorteilhaft im Sinne einer vereinfachten Anwendbarkeit hat sich herausgestellt, daß in den flüssigen Zubereitungen nach der Erfindung die Löslichkeit der Vinylsulfon-Farbstoffe in Wasser, die vorher schon als gelöste ß-Sulfatoäthylsulfon-Farbstoffe vorgelegen haben, größer ist als in Fällen, in denen man zur Lösung direkt

von pulverförmigen Vinylsulfon-Farbstoffen ausgeht. Dieses Phänomen hat praktische Bedeutung bei Zubereitungen, in denen sich aufgrund von hoher Konzentration sowie schlechter Löslichkeit beim Lagern kristalliner Farbstoff abgesetzt hat und dieser Niederschlag dann beim Verdünnen wieder aufgelöst werden soll.

Bei den zur Veranschaulichung der Nutzbarmachung nachstehend beschriebenen speziellen Färbe- und Drucktechniken werden die erfindungsgemäß erhaltenen Farbstoff-Zubereitungen im sauren Bereich bei pH-Werten zwischen vorzugsweise 5 und 6,5 eingesetzt. Im sauren Medium ist die Hydrolysegeschwindigkeit relativ gering, so daß weniger hydrolysierter Farbstoff entsteht. Dadurch wird vermieden, daß sich aus der Vinylsulfon-Form eine größere Menge inaktiver Hydroxyäthylsulfon-Farbstoff bildet, der nicht mehr mit der Faser reagieren kann und infolgedessen verloren geht.

Beim Klotzfärben oder Bedrucken von natürlichen oder synthetischen Polyamidfasern oder deren Mischungen mit anderen Fasern werden die erhaltenen Reaktivfarbstoff-Zubereitungen zunächst im sauren pH-Bereich auf die Fasern appliziert. Die Farbstoff-Fixierung erfolgt anschließend durch Verweilen, Dämpfen oder Trockenhitzebehandlung. Vorzugsweise wird diese Hitzebehandlung direkt nach dem Klotzen oder Bedrucken der feuchten Ware durchgeführt, es ist jedoch auch möglich, das geklotzte oder bedruckte Fasermaterial im Anschluß an den Applikationsvorgang zunächst bei Temperaturen um 100°C zwischenzutrocknen.

Die Trockenhitzebehandlung wird zwischen 30 Sekunden und 10 Minuten, vorzugsweise 2 bis 5 Minuten, bei Temperaturen zwischen 120° und 240°C, vorzugsweise 150° bis 200°C, durchgeführt. Das Dämpfen oder HT-Dämpfen erfolgt während 30 Sekunden bis 30 Minuten bei 100° bis 240°C.

Vorzugsweise wird das Dämpfen unter HT-Bedingungen, beispielsweise 5 Minuten bei 180°C vorgenommen. Beim Dämpfen ist eine gesättigte Dampfatmosphäre nicht unbedingt erforderlich. So wurden beispielsweise gute Ergebnisse erzielt, wenn die Feuchte im Dämpfer etwa 90 % der bei der jeweiligen Temperatur vorliegenden Sättigungsmenge betrug.

Gegenüber den bekannten Arbeitsweisen zum Färben von Wolle und Polyamidfasern mit Reaktivfarbstoffen bietet das neue Verfahren folgende Vorteile:

--- Wolle- und Polyamidfasern können nach einem Klotzverfahren kontinuierlich gefärbt werden,
--- dadurch, daß erfindungsgemäß kaum inaktiver ß-Hydroxyäthylsulfon-Farbstoff gebildet wird, entstehen nur kleine Farbstoffverluste,
--- aufgrund der besseren Farbstoffausnutzung wird darüber hinaus auch die Abwasserbelastung gering,
--- schließlich können Mischgewebe einbadig gefärbt werden, z.B. lassen sich zum Färben von Mischungen aus Polyesterfasern und Wolle diese speziellen Reaktivfarbstoff-Zubereitungen zusammen mit Dispersionsfarbstoffen im sauren Bad einsetzen. Weiterhin ist es möglich, Mischgewebe aus natürlichen oder synthetischen Polyamidfasern und Cellulosefasern mit diesen Reaktivfarbstoff-Zubereitungen gemeinsam zu behandeln, wobei beide Fasertypen gleichzeitig gefärbt werden.

Wie bei den bekannten Verfahren kann auch beim erfindungsgemäßen Verfahren die Farbstoffausbeute durch Erhöhung der Farbstoffsubstantivität, beispielsweise durch Zugabe von Elektrolyten, gesteigert werden.

Die nachstehenden Beispiele dienen zur Erläuterung der Erfindung. Die darin angegebenen Prozentangaben sind Gewichtsprozente, sofern nichts anderes vermerkt ist, und beziehen sich im Falle von Textilmaterial jeweils auf das Gewicht der trockenen Ware.

Beispiel 1

50 g des Reaktivfarbstoffs der Formel

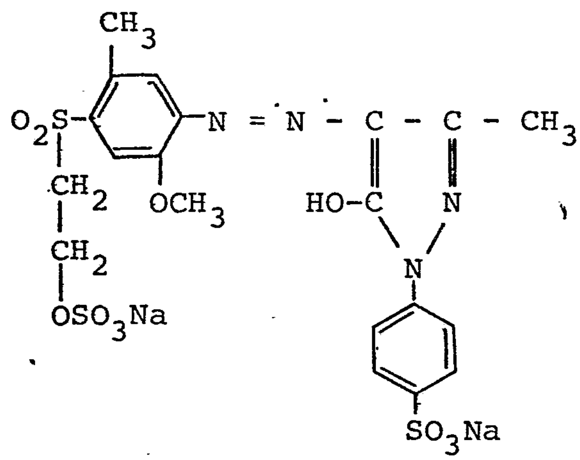

werden in 50 $cm^3$ heißem Wasser gelöst und mit kaltem Wasser auf 1 Liter verdünnt. Dieser Farbstofflösung fügt man nun 20 $cm^3$ Natronlauge (32,5 %ig) hinzu und nach 1 Minute Verweilzeit wird die Zubereitung dann mit Hilfe von Essigsäure neutralisiert sowie auf einen pH-Wert von 6,5 eingestellt.

Mit der so hergestellten Flotte werden Gewebe aus

a) Wolle,
b) Polyamid 6-Fasern und
c) Polyamid 6,6-Fasern

geklotzt, worauf man die geklotzten Gewebe zur Farbstoff-Fixierung in allen Fällen anschließend zu einem Teil

(I) 3 Minuten bei 180°C mit Heißluft behandelt, zu einem anderen Teil

(II) 5 Minuten bei 130°C dämpft, wobei die Dampfmenge im Dämpfer 95 % der bei dieser Temperatur möglichen Sättigungsmenge entspricht.

Die Färbungen werden daraufhin mit Wasser kalt und heiß gespült sowie in einem wäßrigen Bad von 1 g/l eines nichtionogenen Waschmittels 10 Minuten bei 70°C geseift. Man erhält jeweils gelbe Färbungen.

Ähnliche Ergebnisse in entsprechenden Farbtönen lassen sich erzielen, wenn gemäß der Verfahrensweise des zuvor erläuterten Beispieles die in den nachstehenden Beispielen 2 bis 5 angegebenen Farbstoffe eingesetzt werden:

Beispiel 2

Reaktivfarbstoff der Formel

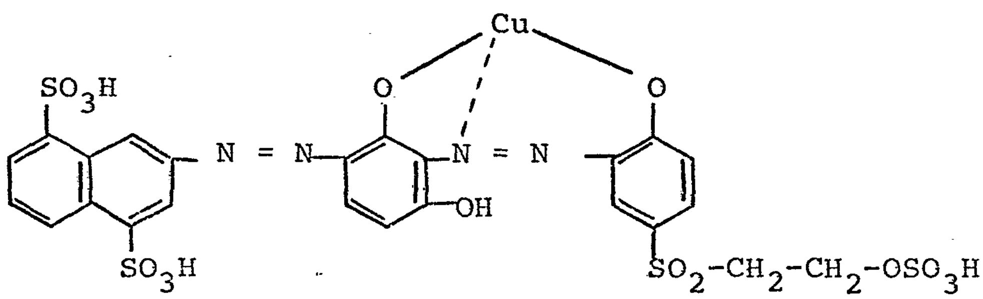

Beispiel 3

Farbstoff Reactive Orange 16 mit der C.I.-Nr. 17 757.

Beispiel 4

Farbstoff Reactive Blue 19 mit der C.I.-Nr. 61 200.

Beispiel 5

Farbstoff Reactive Black 5 mit der C.I.-Nr. 20 205.

Beispiel 6

30 g des gemäß Beispiel 3 angewandten Farbstoffes werden, wie in Beispiel 1 beschrieben, zubereitet.

0066820

Mit dieser Flotte werden nun zwei Mischgewebe aus Polyamidfasern / Baumwolle bzw. Polyamidfasern / Zellwolle geklotzt und anschließend zur Farbstoff-Fixierung 6 Minuten bei 130°C gedämpft (90 % Feuchte im Dämpfer). Die Färbungen werden sodann mit Wasser kalt und heiß gespült sowie in einem wäßrigen Bad mit 1 g/l eines nichtionogenen Waschmittels bei 60°C geseift. Man erhält Orangefärbungen, wobei jeweils beide Faserkomponenten der Mischgewebe nuancengleich gefärbt sind.

Beispiel 7

40 g des Reaktivfarbstoffes der Formel

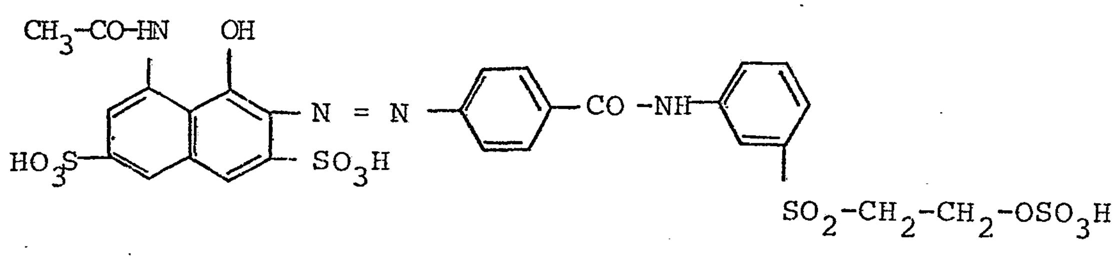

werden in 200 $cm^3$ heißem Wasser gelöst. Nach dem Abkühlen fügt man der Farbstofflösung 10 $cm^3$ Natronlauge (32,5 %ig) hinzu und läßt den Ansatz 1 Minute verweilen, worauf dieser mittels Essigsäure neutralisiert und darin ein pH-Wert von 6,5 eingestellt wird.

Die so hergestellte Farbstoffzubereitung wird nun mit Wasser und einer üblichen Verdickung auf 1 kg Druckpaste aufgefüllt, dabei werden letzteren noch 50 g/kg Harnstoff zugesetzt. Mit dieser Druckpaste wird sodann ein Wollgewebe bedruckt und der Farbstoff durch Dämpfen während 5 Minuten bei 130°C (98 % Feuchte im Dämpfer) fixiert. Anschließend wird das Textilgut mit Wasser kalt und heiß gespült sowie in einer wäßrigen Flotte unter Mitwirkung von 1 g/l eines nichtionogenen Waschmittels 15 Minuten bei 60°C geseift. Man erhält ein rot bedrucktes Gewebe.

 

Beispiel 8

50 g des Farbstoffs Reactive Blue 19 mit der C.I.-Nr. 61 200 werden, wie in Beispiel 1 beschrieben, zubereitet. Dieser Farbstoff-Flotte werden dann noch 40 g des Farbstoffes Disperse Yellow 64 mit der C.I.-Nr. 47 023 und 2 g eines handelsüblichen Netzmittels zugesetzt.

Mit dieser Klotzflotte wird nun ein Mischgewebe aus Polyesterfasern/Wolle (Mischungsverhältnis 55/45) geklotzt. Nach dem Klotzen wird das Gewebe zur Fixierung der beiden Farbstoffe 4 Minuten bei 150°C gedämpft (95 % Feuchte im Dämpfer). Anschließend wird die so gefärbte Ware mit Wasser kalt und heiß gespült sowie mit einem wäßrigen Bad enthaltend 2 g/l eines nichtionogenen Waschmittels 10 Minuten bei 70°C geseift. Man erhält auf dem Mischgewebe eine Bicolor-Färbung, wobei der Polyesterfaseranteil gelb und der Wollanteil blau gefärbt ist.

Beispiel 9

50 g des gemäß Beispiel 3 eingesetzten Farbstoffes werden, wie in Beispiel 1 beschrieben, zubereitet. Nachdem man diesem Farbstoff-Ansatz noch 10 g Natriumacetat und 2 g eines handelsüblichen Netzmittels zugefügt hat, wird mit der hergestellten Klotzflotte ein Gewebe aus Wolle geklotzt und aufgedockt. Nach einer Verweilzeit von 12 Stunden bei Raumtemperatur zur Farbstoff-Fixierung wird das gefärbte Gewebe mit Wasser kalt und heiß gespült und sodann mit einem wäßrigen Bad von 2 g/l eines nichtionogenen Waschmittels 10 Minuten bei 60°C geseift. Man erhält eine Orangefärbung.

PATENTANSPRÜCHE

1. Verfahren zum Klotzfärben oder Bedrucken von Textilmaterial aus natürlichen oder synthetischen Polyamidfasern oder deren Mischungen mit anderen Fasern mit Reaktivfarbstoffen, welche in handelsüblicher Beschaffenheit in einer von sich aus mit der Fasersubstanz nicht reaktionsfähigen Form vorliegen und die aus wäßrigem Medium im Falle des Ausziehfärbens entsprechend bekannten Färbeprozessen sonst entweder direkt in ihrer nicht reaktionsfähigen Form unter sauren Bedingungen oder durch den Einfluß alkalisch wirkender Mittel während des Färbevorganges erst in ihre reaktionsfähige Form umgewandelt und dann unter nachfolgend eingestellten sauren Bedingungen auf der Faser zur Fixierung veranlaßt werden, dadurch gekennzeichnet, daß man diese Reaktivfarbstoffe vor dem Applizieren zunächst in wäßrigem Medium in ihre faserreaktive Form überführt sowie in dieser umgewandelten Form chemisch stabilisiert, und daß man diese Farbstoff-Zubereitungen sodann aus wäßrigem, neutralen bis sauren Milieu in üblicher Weise durch Klotzen oder Bedrucken auf dem Fasermaterial appliziert sowie dort fixiert.

2. Verfahren nach Anspruch 1, dadurch gekennzeichnet, daß als Reaktivfarbstoffe solche verwendet werden, deren in handelsüblicher Beschaffenheit von sich aus nicht faserreaktive Form der Reaktivgruppe sich von Estern leicht abspaltbarer ein- oder mehrwertiger, anorganischer oder organischer Säuren mit ß-Hydroxyäthylsulfon-Verbindungen herleitet.

3. Verfahren nach Anspruch 1 oder 2, dadurch gekennzeichnet, daß als Reaktivfarbstoffe solche verwendet werden, die als Reaktivgruppe mindestens einen Sulfatoäthylsulfon-Rest enthalten.

4. Verfahren nach Ansprüchen 1 bis 3, dadurch gekennzeichnet, daß die Überführung der handelsüblichen, von sich aus nicht faserreaktiven Reaktivfarbstoffe in ihre faserreaktive Form in wäßriger Lösung durch Behandlung mit alkalisch wirkenden Mitteln, und daß die anschließende chemische Stabilisierung dieser umgewandelten Form durch Einstellung eines neutralen bis sauren pH-Bereichs mittels Säurezugabe zu der alkalischen Farbstoff-Lösung erfolgt.

5. Verfahren nach Anspruch 4, dadurch gekennzeichnet, daß als alkalisch wirkende Mittel wäßrige Lösungen von Alkalihydroxiden und/oder von in Wasser alkalisch reagierenden Salzen verwendet werden.

6. Verfahren nach Ansprüchen 1 bis 5, dadurch gekennzeichnet, daß die Farbstoff-Fixierung beim Klotzfärben oder Bedrucken durch Verweilen vorzw. bei Raumtemperatur, Trockenhitzebehandlung während 30 Sekunden bis 10 Minuten bei Temperaturen zwischen 120° und 240°C und/oder Dämpfen während 30 Sekunden bis 30 Minuten bei Temperaturen zwischen 100° und 240°C erfolgt, gegebenenfalls nach einer Zwischentrocknung der Ware im Anschluß an den Applikationsvorgang.

7. Verfahren nach Ansprüchen 1 bis 6, dadurch gekennzeichnet, daß für das Färben oder Bedrucken von Mischgeweben die Zubereitungen der Reaktivfarbstoffe gemeinsam mit Farbstoffen anderer Klassen eingesetzt werden.

8. Verfahren nach Ansprüchen 1 bis 7, dadurch gekennzeichnet, daß Fasermischungen aus natürlichen oder synthetischen Polyamidfasern und Cellulosefasern oder aus natürlichen Polyamidfasern und Polyesterfasern gefärbt oder bedruckt werden.

9. Flüssige mit Wasser unbeschränkt verdünnbare Zubereitungen von Reaktivfarbstoffen zur Durchführung des Verfahrens nach Ansprüchen 1 bis 8, welche in handelsüblicher Beschaffenheit in einer von sich aus mit der Fasersubstanz nicht reaktionsfähigen Form vorliegen und die aus wäßrigem Medium im Falle des Ausziehfärbens entsprechend bekannten Färbeprozessen sonst entweder direkt in ihrer nicht reaktionsfähigen Form unter sauren Bedingungen oder durch den Einfluß alkalisch wirkender Mittel während des Färbevorganges erst in ihre reaktionsfähige Form umgewandelt und dann unter nachfolgend eingestellten sauren Bedingungen auf der Faser zur Fixierung veranlaßt werden, dadurch gekennzeichnet, daß man diese Reaktivfarbstoffe vor dem Klotz- bzw. Druckprozeß durch Behandlung mit alkalisch wirkenden Mitteln in ihre faserreaktive Form überführt und in dieser umgewandelten Form durch Einstellung eines neutralen bis sauren pH-Bereichs mittels Säurezugabe zu der alkalischen Farbstoff-Lösung chemisch stabilisiert.

Europäisches Patentamt

# EUROPÄISCHER RECHERCHENBERICHT

0066820

Nummer der Anmeldung

EP 82 10 4753

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| X | TECHNOLOGY OF THE TEXTILE INDUSTRY U.S.S.R., Nr. 3, 1970, Seiten 86-90, Manchester, G.B. T.A. SIKHARULIDZE et al.: "The interaction of vinyl sulphone dyes with the keratin of wool" * Insgesamt und insbesondere Seite 89, Absatz 2 - letzter Absatz; Seite 90, "Conclusion" 4 und 5 * --- | 1-5,9 | D 06 P 3/10<br>C 09 B 67/26<br>D 06 P 3/82 |
| A | TECHNOLOGY OF THE TEXTILE INDUSTRY U.S.S.R., Nr. 4, 1964, Seiten 106-111, Manchester, G.B. L.A. KOVZHIN et al.: "An efficient method of dyeing capron with reactive vinyl-sulphonic dyes" * Seite 106, letzter Absatz; Seite 110, "Conclusion" 1.a * --- | 1-5,9 | |
| | | | RECHERCHIERTE SACHGEBIETE (Int. Cl. 3) |
| A | MELLIAND TEXTILBERICHTE, Band 45, Nr. 1, 1964, Seiten 51-54, Heidelberg, DE. N. KOLLODZEISKI: "Remazolan-Farbstoffe, eine neue Farbstoffgruppe für die Wolle" * Seite 51, rechte Spalte, Absatz 2 - Seite 54, rechte Spalte, Absatz 1 * --- | 1-5,9 | D 06 P<br>C 09 B |
| A | DE-A-1 916 627 (HOECHST) * Beispiel 2; Seite 20, Ansprüche 1,5 * --- -/- | 1,6,8 | |

Der vorliegende Recherchenbericht wurde für alle Patentansprüche erstellt.

| Recherchenort | Abschlußdatum der Recherche | Prüfer |
|---|---|---|
| DEN HAAG | 16-09-1982 | DEKEIREL M.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches Patentamt

# EUROPÄISCHER RECHERCHENBERICHT

0066820

Nummer der Anmeldung

EP 82 10 4753

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A- 712 037 (HOECHST)<br>* Beispiel 6 *<br>--- | 1,6 | |
| D,A | DE-B-2 834 997 (HOECHST)<br>* Insgesamt und insbesondere Spalte 4, Zeilen 1-12 *<br>--- | | |
| A | TECHNOLOGY OF TEXTILE INDUSTRY U.S.S.R. Nr. 5, 1972, Seiten 105-108, Manchester, G.B.<br>L.G. TSARIKEVICH et al.: "The behaviour of vinyl sulphone reactive dyes in printing on capron fabrics" * Insgesamt *<br>--- | 1-5,9 | |
| A | FR-A-2 267 352 (HOECHST)<br>* Ansprüche 1-3,8; Seite 40, Beispiele 30,31 * & DE - A - 2 417 255<br>----- | 9 | RECHERCHIERTE SACHGEBIETE (Int. Cl. 3) |

Der vorliegende Recherchenbericht wurde für alle Patentansprüche erstellt.

| Recherchenort | Abschlußdatum der Recherche | Prüfer |
|---|---|---|
| DEN HAAG | 16-09-1982 | DEKEIREL M.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82